# EUROPEAN PATENT APPLICATION

(11) **EP 4 552 795 A1**
(43) Date of publication of application: **14.05.2025**
(21) Application number: 24205723.0
(22) Date of filing: 10.10.2024
(51) Int. Cl.: B24B 19/14, B24B 49/12, B24B 51/00, B24B 27/033, B24B 49/16, B25J 9/16, B24B 21/16

(54) **POLISHING SYSTEM AND METHOD OF POLISHING A COMPONENT**

(30) Priority: 09.11.2023 GB 202317161
(71) Applicant: Rolls-Royce plc, London N1 9FX (GB)
(72) Inventor: Harlow, Richard J, Derby, DE24 8BJ (GB); Tivey, Laurence J, Derby, DE24 8BJ (GB); Tarbit, Trevor J, Derby, DE24 8BJ (GB); Bridge, Matthew J, Derby, DE24 8BJ (GB); Sage, Richard, Derby, DE24 8BJ (GB)
(74) Representative: Rolls-Royce plc

(57) **Abstract**

A polishing system (100) for polishing a component (200) has a polishing device (102) that has a housing (106) and a polishing tool (120) interchangeably coupled with the housing (106). The polishing tool (120) is configured to polish the component (200). The polishing device (102) further includes at least one pressure applicator (126) disposed within the housing (106) and configured to apply a pressure on the polishing tool (120) to engage the polishing tool (120) with the component (200). The polishing system (100) further includes a holder (104) interchangeably coupled with the housing (106) of the polishing device (102) to position the polishing device (102) relative to the component (200) and a controller (108) communicably coupled with the at least one pressure applicator (126). The controller (108) is configured to transmit a control signal (C1) to the at least one pressure applicator (126) to apply a predetermined amount of pressure on the polishing tool (120). The polishing device further includes a pressure sensor (128), which is disposed within the housing (106) and communicably coupled with the controller (108), and is configured to generate a pressure signal (P1) indicative of an amount of pressure being applied by the at least one pressure applicator (126) and the holder (104). The polishing system further includes a component monitoring device (132) that is communicably coupled with the controller (108) and is configured to generate a process signal (P2) indicative of a material removal rate from the component (200).

## Description

### FIELD

The present invention relates to a polishing system for polishing a component and a method of polishing the component.

### BACKGROUND

Components, such as those associated with gas turbine engines, experience some form of damage during use. If not repaired in a timely manner, such damage may result in eventual failure of the component. For example, seal fin features associated with turbine discs of gas turbine engines may undergo cracking after continued operation of the gas turbine engine. If observed at component level upon overhaul/ repair, such cracking may deem the component unusable and may have to be scrapped. Such components are typically expensive and it may be advantageous to remanufacture/salvage such components.

Reuse of components can lead to substantial savings, for example, due to cost savings on replacement of such components. Thus, a repair solution may be desired to address cracking issues, so that components can be reused.

Machining a surface of the component is one option that can be used to repair such components. However, in some cases, machining may not be a viable option on some components, for example, due to timescales of deployment, capital expenditure or available operating envelope of non-bespoke machinery. Thus, an improved repair solution may be desired that can be deployed across maintenance, repair, and overhaul bases across various industries and product groups.

### SUMMARY

In a first aspect, there is provided a polishing system for polishing a component. The polishing system includes a polishing device. The polishing device includes a housing. The polishing device further includes a polishing tool interchangeably coupled with the housing. The polishing tool is configured to polish the component. The polishing device further includes at least one pressure applicator disposed within the housing and configured to apply a pressure on the polishing tool to engage the polishing tool with the component. The polishing system further includes a holder interchangeably coupled with the housing of the polishing device to position the polishing device relative to the component. The polishing system further includes a controller communicably coupled with the at least one pressure applicator. The controller is configured to transmit a control signal to the at least one pressure applicator to apply a predetermined amount of pressure on the polishing tool. The polishing device further includes a pressure sensor that is disposed within the housing and communicably coupled with the controller. The pressure sensor is configured to generate a pressure signal indicative of an amount of pressure being applied by the at least one pressure applicator and the holder on the polishing tool. The polishing system further includes a component monitoring device communicably coupled with the controller. The component monitoring device is configured to generate a process signal indicative of a material removal rate from the component.

The polishing system may provide a viable repair solution that can be deployed across maintenance, repair, and overhaul bases across various industries. For example, the polishing system may be used to repair components used in gas turbine engines, internal combustion engines, and the like. In one application, the polishing system may be used to repair cracks on seal fin features of turbine discs associated with gas turbine engines. The polishing system of the present invention may provide a cost-effective and time-effective approach to repair components. Further, the polishing system may be easy to deploy and use for various product groups. The polishing system has universal applicability. Particularly, the polishing system may be used to polish a variety of components that may have a linear shape or a non-linear shape.

It should be further noted that parameters, such as, the material of an abrasive section of the polishing tool, a usage rate of the abrasive section, a position of the polishing tool, a movement speed of the component (e.g., along the rotary or linear directions), and the like may have an impact on an efficiency of a polishing process provided by the polishing system. Thus, such parameters may be controlled in order to achieve a desired level of accuracy from the polishing system.

The polishing system described herein may allow an assessment of the wear rate of the polishing tool and the material removal rate. Based on the assessment, it may be possible to determine a viability of a particular configuration. Further, the said configuration may be further optimized to improve the efficiency/accuracy of the polishing process. For example, based on the assessment, it may be possible to determine if a particular type of abrasive material, a particular type of holder, a particular amount of pressure, and the like may yield improvements in the overall results provided by the polishing system.

Further, the holder of the polishing device may be interchangeable, i.e., the holder may be of any type/arrangement based on application requirements. For example, the holder may include a machine tool, such as, a boring machine, a lathe, or a jig borer. The holder may also include a cobotic arm, a robotic arm, or a bespoke manufactured table/ encoder rotary system. Further, the holder may include a pressure exerting type of system, such as, a vertical boring machine, or a non-pressure exerting type of system, such as, a cobot. Moreover, the polishing device includes the integral pressure applicator, which allows the polishing system to employ the non-pressure exerting type of the holder.

Further, the polishing tool of the polishing device is interchangeable. In other words, different types/designs of the polishing tool may be compatible with the housing. The type/design of the polishing tool may be based on a shape/design of the component, a material of the component being polished, and the like.

In some embodiments, the pressure sensor may include at least one of a digital pressure gauge and an analogue pressure gauge, that is local to the polishing device. The pressure signal from the pressure sensor may be used to control the pressure being applied by the pressure applicator. The at least one pressure applicator and the pressure sensor associated with the polishing device may allow the polishing device to be transferable across different types of holders.

In some embodiments, the component monitoring device may allow the controller of the polishing system to adjust the pressure being applied by the at least one pressure applicator to achieve a desired material removal rate specific to the dynamically adapting cross-sectional profile of the polished component. The incorporation of the component monitoring device may improve an accuracy of the polishing system by ensuring that the material removal rate is as per requirements.

In some embodiments, the component monitoring device includes a laser scanner. Alternatively, the component monitoring device may include any other system that can be used to scan the component to determine the material removal rate corresponding to the dynamically adapting cross-sectional profile of the polished component.

In some embodiments, the controller is configured to transmit the control signal to the at least one pressure applicator to apply the predetermined amount of pressure on the polishing tool, based on the process signal received from the component monitoring device and the pressure signal received from the pressure sensor. The pressure sensor, the controller, and the component monitoring device together provide a closed loop controlled system, that has the ability to adjust the pressure being applied by the at least one pressure applicator to achieve a desired material removal rate. Such a closed loop controlled system may enhance the accuracy of the polishing system.

In some embodiments, the controller is further configured to determine a wear rate of the polishing tool, based on the process signal received from the component monitoring device. Thus, the polishing system described herein may be able to detect if the polishing tool requires replacement based on inputs received from the component monitoring device.

In some embodiments, the holder is further configured to apply a pressure on the polishing device to engage the polishing tool with the component. Thus, the polishing system may be usable with pressure-exerting systems, such as, a vertical boring machine.

In some embodiments, the at least one pressure applicator includes a pair of pressure applicators. The pair of pressure applicators may allow uniform application of pressure on the polishing tool to engage the polishing tool with the component.

In some embodiments, the at least one pressure applicator includes at least one of a spring-operated member, a pneumatically operated member, and a hydraulically operated member. It should be noted that the at least one pressure applicator may employ any other type of pressure application assembly that may include a combination of devices to apply pressure.

In some embodiments, the polishing tool includes a component engaging surface. The component engaging surface includes at least one of a convex profile, a concave profile, and a linear profile. The component engaging surface may have a profile corresponding to the profile of the component. Thus, the polishing system described herein may be used to polish components that may have a convex profile, a concave profile, or a linear profile.

In some embodiments, the polishing system further includes a self-adjustment mechanism configured to press the polishing tool onto an outer surface of the component, such that the profile of the component engaging surface corresponds to a profile of the outer surface of the component. The self-adjustment mechanism may be compressible by the pressure applicators once the polishing tool is aligned with the component. Further, when compressed, the self-adjustment mechanism may cause the polishing tool to correspond to the profile of the component being polished.

In some embodiments, the self-adjustment mechanism includes one or more spring members. The spring members may be compressible by the pressure applicators once the polishing tool is aligned with the component. Further, when compressed, the spring members may cause the polishing tool to correspond to the profile of the component being polished.

In some embodiments, the polishing system further includes a mounting device. The component is removably coupled to the mounting device. The mounting device is movable in at least one of a rotary direction and a linear direction. Specifically, when the component includes a circular profile, the mounting device may be moved in the rotary direction, and when the component includes a linear profile, the mounting device may be moved in the linear direction, thereby increasing an applicability of the polishing system. It should be noted that dimensions of the mounting device, the holder, and the polishing device may be varied to accommodate components of different dimensions and the associated mounting system.

In some embodiments, the polishing tool includes an abrasive section that engages with the component to polish the component. The abrasive section of the polishing tool contacts the component in order to remove material from the component.

In a second aspect, there is provided a method of polishing a component. The method includes providing a polishing device including a housing, a polishing tool interchangeably coupled with the housing, and at least one pressure applicator disposed within the housing and configured to apply a pressure on the polishing tool to engage the polishing tool with the component. The method further includes interchangeably coupling a holder with the housing of the polishing device to position the polishing device relative to the component. The method further transmitting, by a controller, a control signal to the at least one pressure applicator to apply a predetermined amount of pressure on the polishing tool. The method further applying, by the at least one pressure applicator, the predetermined amount of pressure on the polishing tool to engage the polishing tool with the component. The method further polishing an outer surface of the component based on the engagement of the polishing tool with the component.

The method may provide a viable repair solution that can be deployed across maintenance, repair, and overhaul bases across various industries. For example, the method may be used to repair components used in gas turbine engines, internal combustion engines, and the like. In one application, the method may be used to repair cracks on seal fin features of turbine discs associated with gas turbine engines. The method of the present invention may provide a cost-effective and time-effective approach to repair components. Further, the method may be easy to deploy and use for various product groups. The method has universal applicability. Particularly, the method may be used to polish a variety of components that may have a linear shape or a non-linear shape.

It should be further noted that parameters, such as, the material of an abrasive section of the polishing tool, a usage rate of the abrasive section, a position of the polishing tool, a movement speed of the component (e.g., along the rotary, linear or non-linear directions), and the like may have an impact on an efficiency of polishing process provided by the method. Thus, such parameters may be controlled in order to achieve a desired level of accuracy from the method.

The method described herein may allow an assessment of the wear rate of the polishing tool and the material removal rate. Based on the assessment, it may be possible to determine a viability of a particular configuration. Further, the said configuration may be further optimized to improve the efficiency/accuracy of the polishing process. For example, based on the assessment, it may be possible to determine if a particular type of abrasive material, a particular type of holder, a particular amount of pressure, and the like may yield improvements in the overall results provided by the method.

Further, the holder of the polishing device may be interchangeable, i.e., the holder may be of any type/arrangement based on application requirements. For example, the holder may include a machine tool, such as, a boring machine, a lathe, or a jig borer. The holder may also include a cobotic arm, a robotic arm, or a bespoke manufactured table/ encoder rotary system. Further, the holder may include a pressure exerting type of system, such as, a vertical boring machine, or a non-pressure exerting type of system, such as, a cobot. Moreover, the polishing device includes the integral pressure applicator, which allows the polishing device to employ the non-pressure exerting type of the holder.

Further, the polishing tool of the polishing device is interchangeable. In other words, different types/designs of the polishing tool may be compatible with the housing. The type/design of the polishing tool may be based on a shape/design of the component, a material of the component being polished, and the like.

In some embodiments, the method further includes generating, by a pressure sensor disposed within the housing, a pressure signal indicative of an amount of pressure being applied by the at least one pressure applicator and the holder on the polishing tool. The pressure sensor is communicably coupled with the controller. The pressure sensor may include at least one of a digital and an analogue comparative gauge that is local to the polishing device. The pressure signal from the pressure sensor may be used to control the pressure being applied by the pressure applicator.

In some embodiments, the method further includes generating, by a component monitoring device, a process signal indicative of a material removal rate from the component. The component monitoring device is communicably coupled with the controller. The component monitoring device may allow the controller to adjust the pressure being applied by the at least one pressure applicator to achieve a desired material removal rate. The incorporation of the component monitoring device may improve an accuracy of the method by ensuring that the material removal rate is as per requirements.

In some embodiments, the method further includes controlling, by the controller, the at least one pressure applicator to apply the predetermined amount of pressure on the polishing tool, based on the process signal received from the component monitoring device and the pressure signal received from the pressure sensor. The pressure sensor, the controller, and the component monitoring device together provide a closed loop controlled system, that has the ability to adjust the pressure being applied by the at least one pressure applicator to achieve a desired material removal rate. Such a closed loop controlled system may enhance the accuracy of the method.

In some embodiments, the method further includes determining, by the controller, a wear rate of the polishing tool, based on the process signal received from the component monitoring device. Thus, the method described herein may be able to detect if the polishing tool requires replacement based on inputs received from the component monitoring device.

In some embodiments, the method further includes pressing, by a self-adjustment mechanism, the polishing tool onto the outer surface of the component, such that a profile of a component engaging surface of the polishing tool corresponds to a profile of the outer surface of the component. The self-adjustment mechanism may be compressible by the pressure applicators once the polishing tool is aligned with the component. Further, when compressed, the self-adjustment mechanism may cause the polishing tool to correspond to the profile of the component being polished.

### BRIEF DESCRIPTION OF THE DRAWINGS

Embodiments will now be described by way of example only, with reference to the Figures, in which:
**FIG. 1** is a schematic diagram of a polishing system for polishing a component;
**FIG. 2** is a schematic diagram of a polishing device associated with the polishing system of FIG. 1;
**FIG. 3** is a schematic diagram illustrating the polishing device of FIG. 2 engaged with the component;
**FIG. 4** is a block diagram of the polishing system of FIG. 1; and
**FIG. 5** is a flowchart for a method of polishing the component shown in FIG. 3.

### DETAILED DESCRIPTION

Aspects and embodiments of the present invention will now be discussed with reference to the accompanying figures. Further aspects and embodiments will be apparent to those skilled in the art.

As used herein, the term "configured to" and like is at least as restrictive as the term "adapted to" and requires actual design intention to perform the specified function rather than mere physical capability of performing such a function.

As used herein, "at least one of A and B" should be understood to mean "only A, only B, or both A and B".

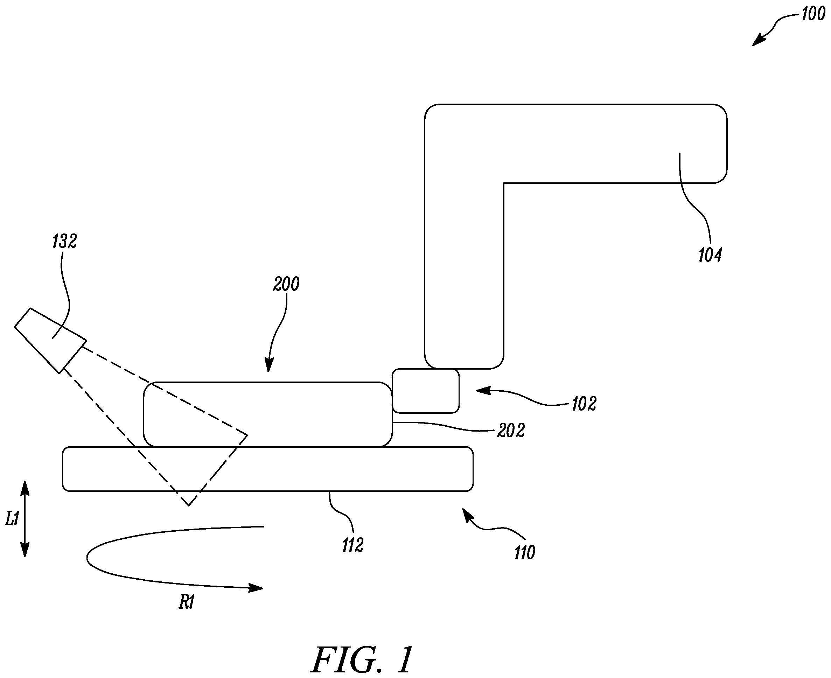

**FIG. 1** is a block diagram of a polishing system 100 for polishing a component 200. The component 200 may have any shape, such as, a square shape, a rectangular shape, a circular shape, or any arbitrary shape, as per application requirements. In the illustrated embodiment of FIG. 1, the component 200 has a circular shape. Further, the component 200 defines an outer surface 202. The outer surface 202 may have a linear profile, a concave profile, and/or a convex profile. In the illustrated embodiment of FIG. 1, the outer surface 202 has a convex profile.

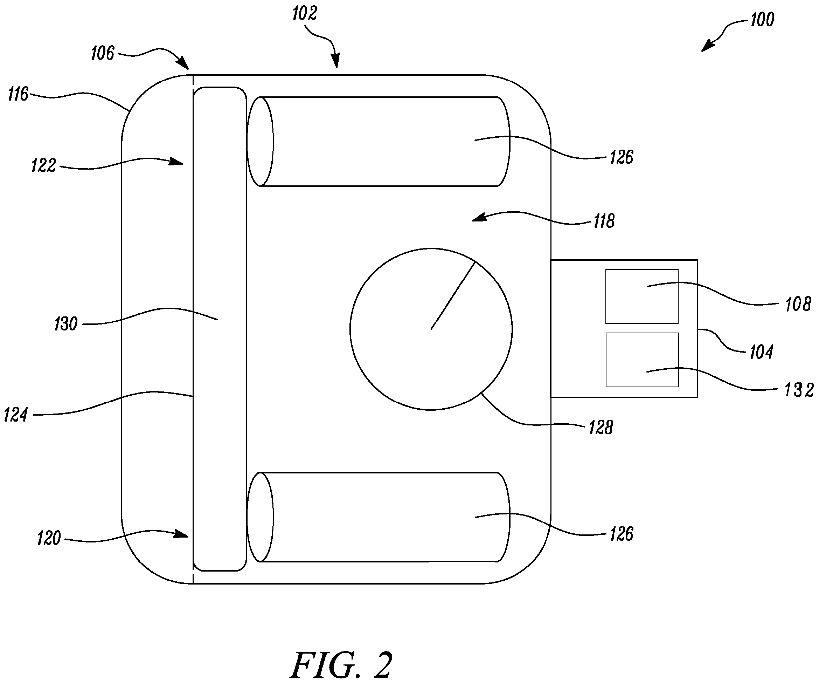

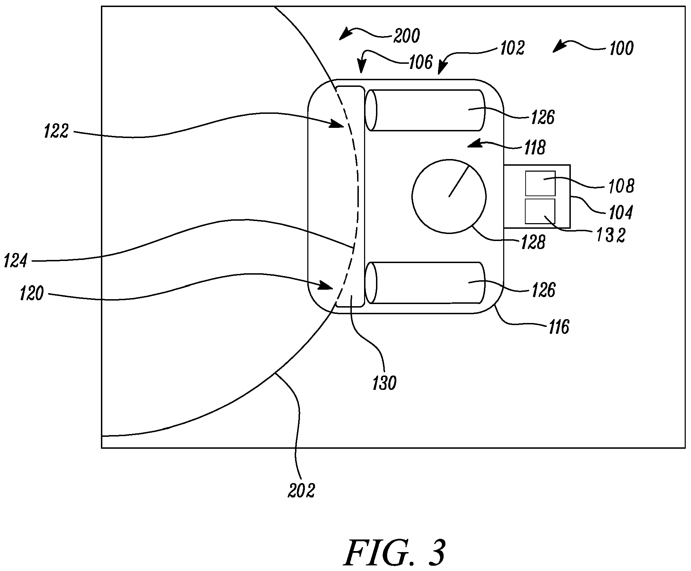

The polishing system 100 includes a polishing device 102. The polishing system 100 further includes a holder 104 interchangeably coupled with a housing 106 (shown in FIGS. 2 and 3) of the polishing device 102 to position the polishing device 102 relative to the component 200. Further, the holder 104 of the polishing device 102 may be interchangeable, i.e., the holder 104 may be of any type/arrangement, based on application requirements. For example, the holder 104 may include a machine tool, such as, a boring machine, a lathe, or a jig borer. The holder 104 may also include a cobotic arm, a robotic arm, or a bespoke manufactured table/ encoder rotary system. Further, the holder 104 may include a pressure exerting type of system, such as, a vertical boring machine, or a non-pressure exerting type of system, such as, a cobot.

The polishing system 100 further includes a controller 108 (shown in FIGS. 2, 3 and 4). The controller 108 will be explained in detail later in this section.

The polishing system 100 further includes a mounting device 110. The mounting device 110 may be communicably coupled with the controller 108. The component 200 is removably coupled to the mounting device 110. The mounting device 110 is movable in at least one of a rotary direction R1 and a linear direction L1. Specifically, when the component 200 has the circular shape, the mounting device 110 may be moved in the rotary direction R1, and when the component 200 has a linear shape/design, such as a polygonal shape, the mounting device 110 may be moved in the linear direction L1. As the mounting device 110 allows usage of the polishing system 100 for polishing components having different shapes, the mounting device 110 may increase an applicability of the polishing system 100. It should be noted that dimensions of the mounting device 110, the holder 104, and the polishing device 102 may be varied to accommodate components of different dimensions.

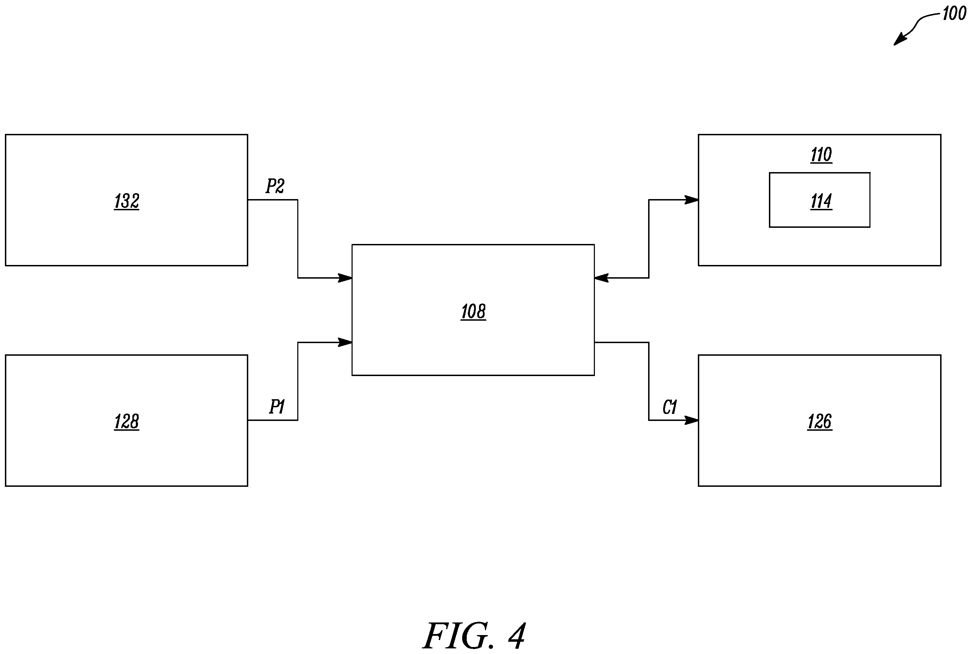

The mounting device 110 includes a mounting table 112 on which the component 200 is positioned. The mounting device 110 may include suitable holding mechanisms (not shown) to hold and support the component 200, so that the component 200 does not move during a polishing process. Further, the mounting device 110 may include an actuation mechanism 114 (shown in FIG. 4) to move the mounting table 112 in the rotary direction R1 and/or the linear direction L1. Furthermore, a speed of movement of the mounting table 112 may be controlled in a desired manner to move the mounting table 112 in the rotary direction R1 or the linear direction L1. In some examples, the actuation mechanism 114 of the mounting device 110 may be communicably coupled with the controller 108 to control the speed of movement of the mounting table 112.

Referring now to **FIG. 2****,** a schematic diagram of the polishing device 102 associated with the polishing system 100 of FIG. 1 is illustrated. As shown in FIG. 2, the polishing device 102 includes the housing 106. The holder 104 is removably coupled with the housing 106. The holder 104 is configured to hold and support the housing 106 relative to the component 200 (see FIGS. 1 and 3).

The housing 106 includes a cover 116 and a hollow space 118 defined by the cover 116. The polishing device 102 further includes a polishing tool 120 interchangeably coupled with the housing 106. Further, the holder 104 may move the housing 106 so that the polishing tool 120 is positioned in a desired orientation relative to the component 200. The polishing tool 120 is received within the hollow space 118 of the housing 106. The polishing tool 120 is configured to polish the component 200. Further, the polishing tool 120 of the polishing device 102 is interchangeable. In other words, different types/designs of the polishing tool 120 may be compatible with the housing 106. The type/design of the polishing tool 120 may be based on a shape/design of the component 200, a material of the component 200 being polished, and the like.

The polishing tool 120 includes an abrasive section 122 that engages with the component 200 to polish the component 200. The abrasive section 122 of the polishing tool 120 contacts the component 200 in order to remove material from the component 200. The abrasive section 122 may be made of a material that removes desired amount of material from the component 200, based on an engagement of the polishing tool 120 with the component 200. The material of the abrasive section 122 may be chosen based on the material of the component 200. The abrasive section 122 faces the component 200. The polishing tool 120 includes a component engaging surface 124. The component engaging surface 124 is defined by the abrasive section 122. The component engaging surface 124 contacts the component 200 during the polishing of the component 200. The component engaging surface 124 includes at least one of a convex profile, a concave profile, and a linear profile. The component engaging surface 124 may have a profile corresponding to the profile of the outer surface 202 (see FIG. 1) of the component 200. Thus, the polishing system 100 described herein may be used to polish components that may have the convex profile, the concave profile, or the linear profile.

The polishing device 102 further includes at least one pressure applicator 126 disposed within the housing 106 and configured to apply a pressure on the polishing tool 120 to engage the polishing tool 120 with the component 200. In the illustrated embodiment of FIG. 2, the at least one pressure applicator 126 includes a pair of pressure applicators 126. The pair of pressure applicator 126 may allow uniform application of pressure on the polishing tool 120 to engage the polishing tool 120 with the component 200. Further, the at least one pressure applicator 126 may include at least one of a spring-operated member, a pneumatically operated member, and a hydraulically operated member. It should be noted that the pressure applicators 126 may employ any other type of pressure application system that may include a combination of devices to apply pressure. Moreover, as the polishing tool 120 includes the integral pressure applicators 126, the polishing system 100 may employ the non-pressure exerting type of the holder 104.

In some embodiments, the holder 104 is also configured to apply a pressure on the polishing device 102 to engage the polishing tool 120 with the component 200. In such embodiments, the holder 104 may include one or more pressure application devices (not shown herein) that may apply the pressure on the polishing device 102. Thus, the polishing system 100 may be usable with pressure-exerting systems, such as a vertical boring machine. When the holder 104 includes the one or more pressure application devices, a pressure applied on the polishing tool 120 may include a combination of the pressure applied by the pressure applicators 126 and the pressure applied by the holder 104.

The polishing device 102 further includes a pressure sensor 128 disposed within the housing 106 and communicably coupled with the controller 108 (see FIG. 3). The pressure sensor 128 is configured to generate a pressure signal P1 (shown in FIG. 4) indicative of an amount of pressure being applied by the at least one pressure applicator 126 and the holder 104 on the polishing tool 120. The pressure sensor 128 may include a digital pressure gauge or an analogue pressure gauge that is local to the polishing device 102. The pressure signal P1 from the pressure sensor 128 may be used to control the pressure being applied by the pressure applicators 126. It should be noted that the pressure sensor 128 may include any type of pressure sensing device known in the art. The pressure applicators 126 and the pressure sensor 128 associated with the polishing device 102 may allow the polishing device 102 to be transferable across different types of holders.

The polishing device 102 further includes a self-adjustment mechanism 130 configured to press the polishing tool 120 onto the outer surface 202 of the component 200, such that a profile of the component engaging surface 124 corresponds to the profile of the outer surface 202 of the component 200. The self-adjustment mechanism 130 may be compressible by the pressure applicators 126 once the polishing tool 120 is aligned with the component 200.

As shown in **FIG. 3****,** when the self-adjustment mechanism 130 is in a compressed state, the self-adjustment mechanism 130 may cause the polishing tool 120 to correspond to the profile of the component 200 being polished. In the illustrated embodiment of FIG. 3, the self-adjustment mechanism 130 includes one or more spring members. Alternatively, the self-adjustment mechanism 130 may include any other device/combination of devices that may press the polishing tool 120 onto the outer surface 202 of the component 200.

Referring to FIGS. 1 and 4, the polishing system 100 further includes a component monitoring device 132 communicably coupled with the controller 108. The component monitoring device 132 is configured to generate a process signal P2 indicative of a material removal rate from the component 200, based on the engagement of the polishing tool 120 with the component 200. The component monitoring device 132 may allow the controller 108 of the polishing system 100 to adjust the pressure being applied by the pressure applicators 126 to achieve a desired material removal rate. The incorporation of the component monitoring device 132 may improve an accuracy of the polishing system 100 by ensuring that the material removal rate is as per requirements. In some embodiments, the component monitoring device 132 includes a laser scanner. Alternatively, the component monitoring device 132 may include any other system/combination of devices that can be used to scan the component 200 to determine the material removal rate.

Referring now to **FIG. 4****,** the polishing system 100 includes the controller 108. The controller 108 may include one or more processors and one or more memories. In some examples, the memories may include a random access memory (RAM), such as synchronous dynamic random access memory (SDRAM), a read-only memory (ROM), a non-volatile random access memory (NVRAM), an electrically erasable programmable read-only memory (EEPROM), a FLASH memory, a magnetic or optical data storage media, and the like, that can be used to store various information or desired program codes in the form of instructions or data structures and that can be accessed by processors.

Further, the processors may execute various types of digitally stored instructions, such as software applications or algorithms, retrieved from the memories, or a firmware program which may enable the processors to perform a wide variety of operations. It should be noted that the processors may embody a single microprocessor or multiple microprocessors for receiving various input signals and generating output signals. Numerous commercially available microprocessors may perform the functions of the processors. Each processor may further include a general processor, a central processing unit, an application specific integrated circuit (ASIC), a digital signal processor, a field programmable gate array (FPGA), a digital circuit, an analog circuit, a microcontroller, any other type of processor, or any combination thereof. Each processor may include one or more components that may be operable to execute computer executable instructions or computer code that may be stored and retrieved from the memories.

The controller 108 is communicably coupled with the at least one pressure applicator 126. The controller 108 is configured to transmit a control signal C1 to the at least one pressure applicator 126 to apply a predetermined amount of pressure on the polishing tool 120. The controller 108 is configured to receive the pressure signal P1 from the pressure sensor 128. The controller 108 is also configured to receive the process signal P2 from the component monitoring device 132. Further, the controller 108 is configured to transmit the control signal C1 to the at least one pressure applicator 126 to apply the predetermined amount of pressure on the polishing tool 120, based on the process signal P2 received from the component monitoring device 132 and the pressure signal P1 received from the pressure sensor 128. Specifically, the controller 108 may compare if the material removal rate corresponds to a desired material removal rate. The desired material removal rate may be stored in the memories of the controller 108.

If the controller 108 determines that the material removal rate corresponds to the desired material removal rate, the controller 108 may cause the pressure applicators 126 to continue applying the same amount of the predetermined pressure. However, if the controller 108 determines that the material removal rate does not correspond to the desired material removal rate, the controller 108 may control the pressure applicators 126 to adjust the pressure being applied by the pressure applicators 126 in order to achieve a desired material removal rate.

Thus, the pressure sensor 128, the controller 108, and the component monitoring device 132 together provide a closed loop controlled system, that has the ability to adjust the pressure being applied by the pressure applicators 126 to achieve a desired material removal rate. Such a closed loop controlled system may enhance the accuracy of the polishing system 100.

The controller 108 may be further configured to determine a wear rate of the polishing tool 120, based on the process signal P2 received from the component monitoring device 132. In some examples, the memories of the controller 108 may store a data sheet indicating a correlation between the pressure being applied by the pressure applicators 126 and the material removal rate. Further, the controller 108 may analyse the pressure signal P1 from the pressure sensor 128 and the process signal P2 from the component monitoring device 132 and refer to the datasheet to determine if a particular amount of pressure being applied by the pressure applicators 126 corresponds to a corresponding material removal rate from the component 200. Based on the determination, the controller 108 may be able to determine the wear rate of the polishing tool 120.

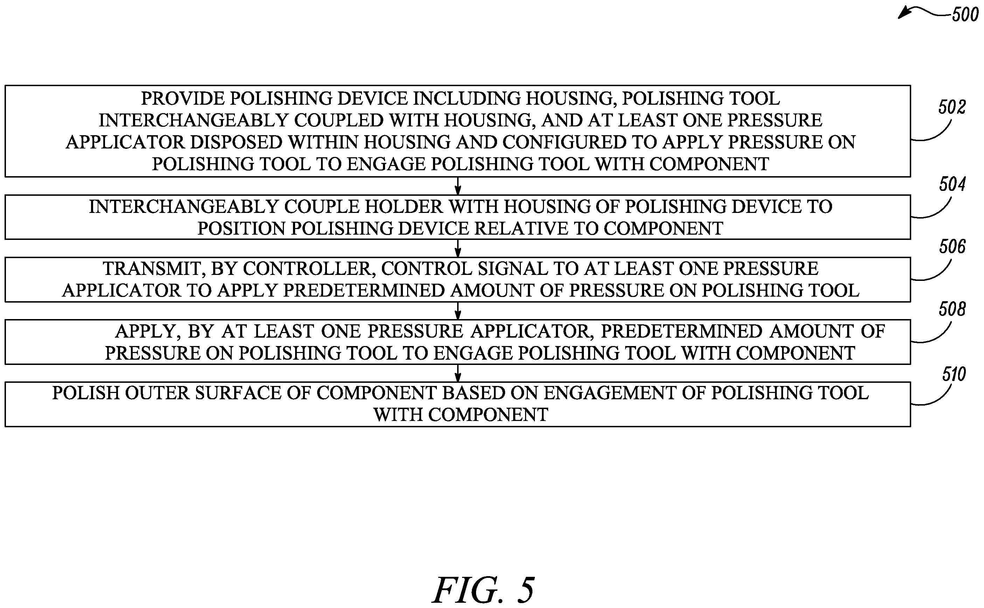

**FIG. 5** is a flowchart for a method 500 of polishing the component 200. Referring to FIGS. 1 to 5, at step 502, the polishing device 102 is provided. The polishing device 102 includes the housing 106, the polishing tool 120 interchangeably coupled with the housing 106, and the at least one pressure applicator 126 disposed within the housing 106 and configured to apply the pressure on the polishing tool 120 to engage the polishing tool 120 with the component 200.

At step 504, the holder 104 is interchangeably coupled with the housing 106 of the polishing device 102 to position the polishing device 102 relative to the component 200.

At step 506, the controller 108 transmits the control signal C1 to the at least one pressure applicator 126 to apply the predetermined amount of pressure on the polishing tool 120.

At step 508, the at least one pressure applicator 126 applies the predetermined amount of pressure on the polishing tool 120 to engage the polishing tool 120 with the component 200.

At step 510, the outer surface 202 of the component 200 is polished based on the engagement of the polishing tool 120 with the component 200.

The method 500 also includes a step at which the pressure sensor 128 disposed within the housing 106 generates the pressure signal P1 indicative of the amount of pressure being applied by the at least one pressure applicator 126 and the holder 104 on the polishing tool 120. The pressure sensor 128 is communicably coupled with the controller 108.

The method 500 also includes a step at which the component monitoring device 132 generates the process signal P2 indicative of the material removal rate from the component 200, based on the engagement of the polishing tool 120 with the component 200. The component monitoring device 132 is communicably coupled with the controller 108.

The method 500 also includes a step at which the controller 108 controls the at least one pressure applicator 126 to apply the predetermined amount of pressure on the polishing tool 120, based on the process signal P2 received from the component monitoring device 132 and the pressure signal P1 received from the pressure sensor 128.

The method 500 also includes a step at which the controller 108 determines the wear rate of the polishing tool 120, based on the process signal P2 received from the component monitoring device 132.

The method 500 also includes a step at which the self-adjustment mechanism 130 presses the polishing tool 120 onto the outer surface 202 of the component 200, such that the profile of the component engaging surface 124 of the polishing tool 120 corresponds to the profile of the outer surface 202 of the component 200.

The polishing system 100 and the method 500 may provide a viable repair solution that can be deployed across maintenance, repair, and overhaul bases across various industries. For example, the polishing system 100 and the method 500 may be used to repair components used in gas turbine engines, internal combustion engines, and the like. In one application, the polishing system 100 and the method 500 may be used to repair cracks on seal fin features of turbine discs associated with gas turbine engines. The polishing system 100 and the method 500 of the present invention may provide a cost-effective and time-effective approach to repair components. Further, the polishing system 100 and the method 500 may be easy to deploy and use for various product groups. The polishing system 100 and the method 500 has universal applicability. Particularly, the polishing system 100 and the method 500 may be used to polish a variety of components that may have a linear shape or a non-linear shape.

It should be further noted that parameters, such as, the material of the abrasive section 122, a usage rate of the abrasive section 122, a position of the polishing tool 120 relative to the component 200, a movement speed of the component 200 (e.g., along the rotary or linear directions R1, L1), and the like may have an impact on the polishing process performed by the polishing system 100 and the method 500. Thus, such parameters may be controlled in order to achieve a desired level of accuracy from the polishing system 100 and the method 500.

Further, the polishing system 100 and the method 500 described herein may allow an assessment of the wear rate of the polishing tool 120 and the material removal rate. Based on the assessment, it may be possible to determine a viability of a particular configuration. Further, the said configuration may be further optimized to improve an efficiency/accuracy of the polishing process. For example, based on the assessment, it may be possible to determine if a particular type of abrasive material for the abrasive section 122, a particular type of the holder 104, a particular amount of pressure, and the like may yield improvements in the overall results provided by the polishing system 100 and the method 500.

## Claims

1. A polishing system (100) for polishing a component (200), the polishing system (100) comprising:
a polishing device (102) including:
a housing (106);
a polishing tool (120) interchangeably coupled with the housing (106), wherein the polishing tool (120) is configured to polish the component (200); and
at least one pressure applicator (126) disposed within the housing (106) and configured to apply a pressure on the polishing tool (120) to engage the polishing tool (120) with the component (200);
a holder (104) interchangeably coupled with the housing (106) of the polishing device (102) to position the polishing device (102) relative to the component (200); and
a controller (108) communicably coupled with the at least one pressure applicator (126), wherein the controller (108) is configured to transmit a control signal (C1) to the at least one pressure applicator (126) to apply a predetermined amount of pressure on the polishing tool (120); and
wherein the polishing device further includes a pressure sensor (128) disposed within the housing (106) and communicably coupled with the controller (108), and the pressure sensor (128) is configured to generate a pressure signal (P1) indicative of an amount of pressure being applied by the at least one pressure applicator (126) and the holder (104) on the polishing tool (120); and
the polishing system further includes a component monitoring device (132) communicably coupled with the controller (108), and the component monitoring device (132) is configured to generate a process signal (P2) indicative of a material removal rate from the component (200).

2. The polishing system (100) of claim 1, wherein the component monitoring device (132) includes a laser scanner.

3. The polishing system (100) of claim 1 or 2, wherein the controller (108) is configured to transmit the control signal (C1) to the at least one pressure applicator (126) to apply the predetermined amount of pressure on the polishing tool (120), based on the process signal (P2) received from the component monitoring device (132) and the pressure signal (P1) received from the pressure sensor (128).

4. The polishing system (100) of any preceding claim, wherein the controller (108) is further configured to determine a wear rate of the polishing tool (120), based on the process signal (P2) received from the component monitoring device (132).

5. The polishing system (100) of any preceding claim, wherein the holder (104) is further configured to apply a pressure on the polishing device (102) to engage the polishing tool (120) with the component (200).

6. The polishing system (100) of any preceding claim, wherein the at least one pressure applicator (126) includes a pair of pressure applicators (126).

7. The polishing system (100) of any preceding claim, wherein the at least one pressure applicator (126) includes at least one of a spring-operated member, a pneumatically operated member, and a hydraulically operated member.

8. The polishing system (100) of any preceding claim, wherein the polishing tool (120) includes a component engaging surface (124), and wherein the component engaging surface (124) includes at least one of a convex profile, a concave profile, and a linear profile.

9. The polishing system (100) of claim 8, further comprising a self-adjustment mechanism (130) configured to press the polishing tool (120) onto an outer surface (202) of the component (200), such that a profile of the component engaging surface (124) corresponds to a profile of the outer surface (202) of the component (200).

10. The polishing system (100) of claim 9, wherein the self-adjustment mechanism (130) includes one or more spring members.

11. The polishing system (100) of any preceding claim, further comprising a mounting device (110), wherein the component (200) is removably coupled to the mounting device (110), and wherein the mounting device (110) is movable in at least one of a rotary direction (R1) and a linear direction (L1).

12. The polishing system (100) of any preceding claim, wherein the polishing tool (120) includes an abrasive section (122) that engages with the component (200) to polish the component (200).

13. A method (500) of polishing a component (200), the method (500) comprising the steps of:
providing a polishing device (102) including a housing (106), a polishing tool (120) interchangeably coupled with the housing (106), and at least one pressure applicator (126) disposed within the housing (106) and configured to apply a pressure on the polishing tool (120) to engage the polishing tool (120) with the component (200);
interchangeably coupling a holder (104) with the housing (106) of the polishing device (102) to position the polishing device (102) relative to the component (200);
transmitting, by a controller (108), a control signal (C1) to the at least one pressure applicator (126) to apply a predetermined amount of pressure on the polishing tool (120);
applying, by the at least one pressure applicator (126), the predetermined amount of pressure on the polishing tool (120) to engage the polishing tool (120) with the component (200); and
polishing an outer surface (202) of the component (200) based on the engagement of the polishing tool (120) with the component (200);
the method further comprising:
generating, by a pressure sensor (128) disposed within the housing (106), a pressure signal (P1) indicative of an amount of pressure being applied by the at least one pressure applicator (126) and the holder (104) on the polishing tool (120), wherein the pressure sensor (128) is communicably coupled with the controller (108); and
generating, by a component monitoring device (132), a process signal (P2) indicative of a material removal rate from the component (200), wherein the component monitoring device (132) is communicably coupled with the controller (108).

14. The method (500) of claim 13, further comprising controlling, by the controller (108), the at least one pressure applicator (126) to apply the predetermined amount of pressure on the polishing tool (120), based on the process signal (P2) received from the component monitoring device (132) and the pressure signal (P1) received from the pressure sensor (128).

15. The method (500) of claim 13 or 14, further comprising:
determining, by the controller (108), a wear rate of the polishing tool (120), based on the process signal (P2) received from the component monitoring device (132); and/or
pressing, by a self-adjustment mechanism (130), the polishing tool (120) onto the outer surface (202) of the component (200), such that a profile of a component engaging surface (124) of the polishing tool (120) corresponds to a profile of the outer surface (202) of the component (200).
